(19) Europäisches Patentamt
European Patent Office
Office européen des brevets

(11) Publication number: **0 153 867**
**A2**

# (12) EUROPEAN PATENT APPLICATION

(21) Application number: 85301374.6

(22) Date of filing: 28.02.85

(51) Int. Cl.[4]: C 08 K 5/13
C 08 K 5/37, C 08 L 23/12

(30) Priority: 29.02.84 JP 39196/84

(43) Date of publication of application: 04.09.85 Bulletin 85/36

(84) Designated Contracting States: CH DE FR GB IT LI NL

(71) Applicant: SUMITOMO CHEMICAL COMPANY, LIMITED
15 Kitahama 5-chome Higashi-ku
Osaka-shi Osaka 541(JP)

(72) Inventor: Ishii, Tamaki
1-12-2, Uchihonmachi
Suita Osaka-fu(JP)

(72) Inventor: Yachigo, Shinichi
2-11-7-305, Sone Higashimachi
Toyonaka Osaka-fu(JP)

(72) Inventor: Sasaki, Manji
2-1, Kuwatacho
Ibaraki Osaka-fu(JP)

(72) Inventor: Okamura, Haruki
4-2-711, Shigino-nishi 3-chome
Joto-ku Osaka(JP)

(72) Inventor: Shionoya, Masahisa
106-53, Wakecho
Izumi Osaka-fu(JP)

(74) Representative: Geering, Keith Edwin et al,
REDDIE & GROSE 16 Theobalds Road
London WC1X 8PL(GB)

## (54) Phenolic compound, resin stabilizer containing it, and synthetic resins stabilized thereby.

(57) The invention provides a stabilizer for synthetic resins containing as an effective component a mixture comprising at least one phenolic type compound selected from those of formula (I),

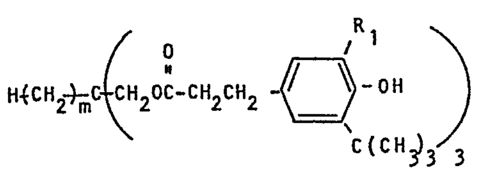

(I)

wherein m is an integer of 0 to 6 and $R_1$ represents a $C_1$-$C_3$ alkyl group, and at least one sulfur-containing compound (II) selected from those of formula (II-1),

$$\left(R_2-S-CH_2CH_2\overset{O}{\overset{\|}{C}}-O-CH_2\right)_4 C \qquad (II-1)$$

wherein $R_2$ represents a $C_4$-$C_{20}$ alkyl group, and those of formula (II-2),

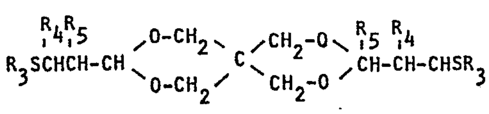

(II-2)

wherein $R_3$ represents a $C_3$-$C_{18}$ alkyl group, and $R_4$ and $R_5$ are selected independently from a hydrogen atom and $C_1$-$C_6$ alkyl groups.

There is also provided a synthetic resin, e.g. a polyolefin and preferably polypropylene, incorporating a stabilizer of the invention.

EP 0 153 867 A2

PHENOLIC COMPOUND, RESIN STABILIZER CONTAINING IT, AND SYNTHETIC RESINS STABILIZED THEREBY.



The present invention relates to a stabilizer for synthetic resins.

Various kinds of synthetic resin such as polyolefins (e.g. polyethylene, polypropylene), styrene type synthetic resins (e.g. polystyrene, impact-resistant polystyrene, ABS), engineering plastics (e.g. polyacetal, polyamide), polyurethane, etc. are widely used in various fields. It is however well known that when these synthetic resins are used alone, their stability becomes a problem, for example they deteriorate by the action of heat, light and oxygen on processing or use, thereby showing a remarkable reduction in mechanical properties accompanied by phenomena such as softening, embrittlement, surface crack, discoloration and the like.

It is also hitherto well known that, in order to solve this problem, various phenolic, phosphite-type or sulfur-containing anti-oxidants are added or used in the course of production and processing of synthetic resins. For example, it is well known that phenolic type antioxidants such as 2,6-di-tert-butyl-4-methylphenol, 2,2'-methylenebis(4-methyl-6-tert-butylphenol), 4,4'-butylidenebis(3-methyl-6-tert-butylphenol), n-octadecyl 3-(3,5-di-tert-butyl-4-hydroxyphenyl)propionate, 1,1,3-tris(2-methyl-4-hydroxy-5-tert-butyl-phenyl)butane, tetrakis[3-(3,5-di-tert-butyl-4-hydroxyphenyl) propionyl-oxymethyl]methane and the like are used alone, or these phenolic type antioxidants are used in combination with phosphite-type antioxidants such as tris(nonylphenyl)phosphite, distearyl pentaerythritol diphosphite and the like, or sulfur-containing antioxidants such as dilauryl thiodipropionate, dimyristyl thiodipropionate, distearyl thiodipropionate and the like.

The methods are not wholly satisfactory in terms

of thermal and oxidation stability, thermal discoloration resistance, sublimation and the like.

A stabilizer comprising pentaerythritol tetrakis-[3-(3,5-dialkyl-4-hydroxyphenyl)propionate] and pentaerythritol tetrakis(3-alkylthio-propionate) is proposed in Japanese Patent Application Kokai (Laid-open) No. 20337/1984. This stabilizer is fairly superior to the conventional ones, but it is not always wholly satisfactory in terms of the thermal and oxidation stability, thermal discoloration resistance, etc. so that there has been a demand for stabilizers of higher performance.

The present inventors extensively studied to solve these problems, and as a result, found that a mixture comprising particular phenolic type and particular sulfur-containing compounds can give synthetic resins excellent thermal and oxidation stability not predictable from the conventional antioxidant-combination techniques.

The present invention provides a stabilizer for synthetic resins containing as an effective component a mixture comprising at least one phenolic type compound (I) of formula (I),

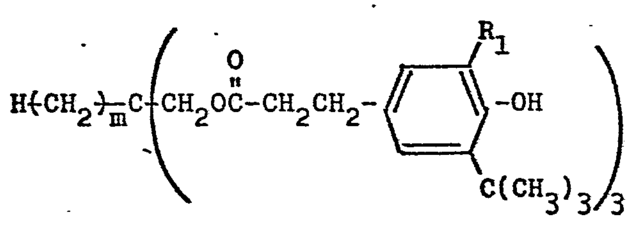 (I)

wherein m is an integer of 0 to 6 and $R_1$ represents a $C_1$-$C_3$ alkyl, and at least one sulfur-containing compound (II) selected from those of formula (II-1),

$$(R_2-S-CH_2CH_2\overset{O}{\overset{\|}{C}}-O-CH_2)_4 C \qquad (II-1)$$

wherein $R_2$ represents a $C_4$-$C_{20}$ alkyl group, and those of formula (II-2),

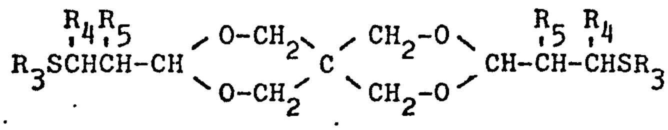 (II-2)

wherein $R_3$ represents a $C_3$-$C_{18}$ alkyl group, and $R_4$ and $R_5$ independently represent a hydrogen atom or a $C_1$-$C_6$ alkyl group; the weight ratio of phenolic type compound (I) to sulfur-containing one (II) is e.g. 1 to 0.5-15.

The phenolic type compounds of the foregoing formula (I) used in the present invention can be produced by the common esterification of polyhydric alcohols with 3-(3-alkyl-5-tert-butyl-4-hydroxyphenyl)propionic acid, its acid halide, acid anhydride or mixed acid anhydride, or by the common ester interchange reaction of a polyhydric alcohol with a lower alkyl ester of said acid.

The polyhydric alcohols include, for example trimethylolmethane, trimethylolethane, trimethylolpropane, trimethylolbutane, trimethylolpentane, trimethylolhexane, trimethylolheptane and the like.

In the phenolic type compounds represented by the foregoing formula (I), $R_1$ represents methyl, ethyl or propyl but methyl is most preferred for good thermal and oxidation stability.

In the compounds represented by the formula (II-1), substituent $R_2$ is preferably a $C_6$-$C_{18}$ alkyl group, most preferably a dodecyl group for good thermal and oxidation stability.

Typical examples of such compound are shown in Table 1.

Table 1

$$(R_2-S-CH_2CH_2\overset{\overset{O}{\|}}{C}-O-CH_2)_4\,C$$

| Compound No. | $R_2$ |
|---|---|
| II-1-1 | $-C_6H_{13}$ |
| II-1-2 | $-C_{12}H_{25}$ |
| II-1-3 | $-C_{18}H_{37}$ |

In the compounds represented by the formula (II-2), substituent $R_3$ is preferably a $C_8$ $-C_{18}$ alkyl group and substituents $R_4$ and $R_5$ are preferably hydrogen atom or a $C_1$-$C_3$ alkyl group for good thermal and oxidation stability.

Typical examples of such compound are shown in Table 2.

Table 2

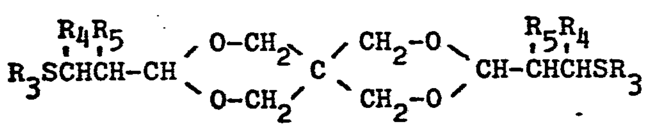

| Compound No. | $R_3$ | $R_4$ | $R_5$ |
|---|---|---|---|
| II-2-1 | $-C_8H_{17}$ | $-CH_3$ | -H |
| II-2-2 | $-C_{12}H_{25}$ | $-C_4H_9$ | -H |
| II-2-3 | $-C_{12}H_{25}$ | $-CH_3$ | -H |
| II-2-4 | $-C_{18}H_{37}$ | $-CH_3$ | -H |
| II-2-5 | $-C_{12}H_{25}$ | -H | -H |
| II-2-6 | $-C_{18}H_{37}$ | -H | $-CH_3$ |

The stabilizer for synthetic resins of the present invention comprises, as described above, a mixture of - phenolic type compound (I) represented by the formula (I) and sulfur-containing compound (II) selected from compounds represented by the formula (II-1) and (II-2), and the weight ratio of phenolic type compound (I) to sulfur-containing compound (II) is e.g. 1 to 0.5-15, preferably 1 to 1-10, more preferably 1 to 2-6.

When the weight ratio of sulfur-containing compound (II) to phenolic type (I) is less than 0.5, the intended effect is difficult to obtain. If the weight ratio exceeds 15, a correspondingly increased effect is difficult to obtain, and such ratio may be disadvantageous economically.

In using the stabilizer of the present invention, the amount of the stabilizer blended with synthetic resins is generally 0.01 to 5 parts by weight, preferably 0.05 to 1 part by weight based on 100 parts by weight of the synthetic resin. In using the stabilizer, the phenolic type (I) and sulfur-containing (II) compounds may separately be blended with the synthetic resin without mixing the compounds in advance.

For blending the stabilizer with synthetic resins, the well-known apparatus and methods for incorporating stabilizers, pigments fillers, etc. in synthetic resins may be used.

In applying the stabilizer of the present invention, other additives such as ultraviolet absorbers, light stabilizers, antioxidants, metal deactivators, metal soaps, nucleating agents, lubricants, antistatic agents, flame retardants, pigments fillers and the like may be used together with said stabilizer.

Particularly, the light fastness of synthetic resins can be improved by using ultraviolet absorbers, hindered amine type light-stabilizers, etc. such as 2-hydroxy-4-methoxybenzophenone,

2-hydroxy-4-n-octoxybenzophenone, 2-(2-hydroxy-5-methylphenyl)benzotriazole, 2-(2-hydroxy-3-tert-butyl-5 -methylphenyl)-5-chlorobenzotriazole, 2-(2-hydroxy-3,5-di-tert-butylphenyl)-5-chlorobenzotriazole, 2-(2-hydroxy-3,5-diamylphenyl)benzotriazole, [2, 2'-thiobis(4-tert-octylphenolate)]-butylamine nickel complex, 2,2,6,6-tetramethyl-4-piperidyl benzoate, bis(2,2,6,6-tetramethyl-4-piperidyl) sebacate,

bis (1,2,2,6,6-pentamethyl-4-piperidyl) 2-(3,5-di-tert-butyl-4-hydroxybenzyl)2-n-butylmalonate, 1-[2-{3-(3,5-di-tert-butyl-4-hydroxyphenyl)propionyl-oxy}ethyl]-4-[3-(3,5-di-tert-butyl-4-hydroxyphenyl)propionyloxy]-2,2,6,6-tetramethylpiperidine, dimethyl succinate/1-(2-hydroxyethyl)-4-hydroxy-2,2,6,6-tetramethylpiperidine polycondensation product, a reaction product of dihaloalkylene with N,N'-bis(2,2,6,6-tetramethyl-4-piperidyl)alkylenediamine, a reaction product of 2,6-dichloro-1,3,5-triazine with N,N'-bis(2,2,6,6-tetramethyl-4-piperidyl) alkylenediamine, etc. together with the stabilizer of the present invention.

Also, the color of synthetic resins can be improved by adding a phosphite type antioxidant. Such antioxidants include for example distearyl pentaerythritol diphosphite, tris(2,4-di-tert-butylphenyl)phosphite, tris(2-tert-butyl-4-methylphenyl) phosphite, bis(2,4-di-tert-butylphenyl) pentaerythritol diphosphite, tetrakis(2,4-di-tert-butylphenyl)-4,4'-biphenylene diphosphite and the like.

By using the stabilizer of the present invention, the stability of synthetic resins can be improved. As such synthetic resins, there are given for example low-density polyethylene, high-density polyethylene, linear low-density polyethylene, chlorinated polyethylene, EVA resin, polypropylene, polyvinyl chloride, methacrylic resin, polystyrene, impact-resistant polystyrene, ABS resin, AES resin, MBS resin,

polyethylene terephthalate, polybutylene terephthalate, polyamide, polyimide, polycarbonate, polyacetal, polyurethane, unsaturated polyester resin and the like. The stabilizer of the present invention is particularly effective on polypropylene.

Next, the present invention will be illustrated in detail with reference to the following examples, which are not however to be interpreted as limiting the invention thereto.

Production of the compound I-1

A mixture of 18.03 grams (0.072 mole) of methyl 3-(3-tert-butyl-4-hydroxy-5-methylphenyl)propionate, 2.69 g (0.02 mole) of trimethylolpropane and 0.33 g (0.006 mole) of sodium methoxide was reacted together at 140°C for 3 hours, the pressure of the system was reduced to 50 ~ 20 mmHg, and reaction was carried out at 140°C ~ 150°C for 10 hours under this reduced pressure. The reaction was continued for further 10 hours while raising the temperature to 190°C and reducing the pressure to 2 mmHg.

After completion of the reaction, the reaction product was dissolved in toluene, and the toluene solution was washed with a dilute aqueous hydrochloric acid and then with water. Thereafter, toluene was removed by evaporation under reduced pressure to obtain a crude product. The product was purified by column chromatography on silica gel to obtain 10.5 g of a 99%-purity white solid, trimethylolpropane tris[3-(3-tert-butyl-4-hydroxy-5-methylphenyl)propionate] (compound I-1)

m.p. 52° - 54°C

Mass analytical value (FD-mass) :

Molecular ion peak 788

Proton NMR ($CDCl_3$/TMS) :

δ (ppm) 0.9(5H m), 1.39(27H s), 2.18(9H s), 2.7(12H m), 3.91(6H s), 4.68(3H s), 6.82(3H s), 6.92(3H s)

Production of compound I-2 :

18.03 g (0.072 mole) of methyl 3-(3-t-butyl-4-hydroxy-5-methylphenyl)propionate and 2.4 g (0.02 mole) of trimethylolethane were reacted and after-treated in the same manner as for compound I-1 above to obtain 11.3 g of a 99%-purity glass-like substance, trimethylolethane tris[3-(3-t-butyl-4-hydroxy-5-methylphenyl)propionate] (Compound I-2).

m.p. 32° - 41°C

Mass analytical value (FD-mass) :

Molecular ion peak 775 $(M+1)^+$

Proton NMR ($CDCl_3$/TMS) :

δ (ppm) 0.85 (3H s), 1.40 (27H s), 2.20 (9H s), 2.4-2.9 (12H m), 3.87 (6H s), 4.67 (3H s) 6.84 (3H s), 6.94 (3H s)

Production of compound I-3 :

24.04 g (0.072 mole) of methyl 3-(3-t-butyl-4-hydroxy-5-isopropylphenyl)propionate and 2.69 g (0.02 mole) of trimethylolpropane were reacted and after-treated in the same manner as for compound I-1 above to obtain 11.2 g of a 99%-purity glass-like substance, trimethylolpropane tris[3-(3-t-butyl-4-hydroxy-5-isopropylphenyl) propionate] (Compound I-3).

m.p. 37° - 47° C

Mass analytical value (FD-mass) :

Molecular ion peak 873 $(M+1)^+$

Proton NMR ($CDCl_3$/TMS) :

δ(ppm) 0.89 (3H t), 1.24 (18H d), 1.40 (27H s), 1.1-1.5 (2H m), 2.3-3.2 (15H m), 3.95 (6H s), 4.84 (3H OH), 6.8-7.0 (6H m)

Procedure 1

The following components were mixed on a mixer for 5 minutes and then melt-kneaded at 180°C on a mixing roll to obtain a blend. This blend was formed into a sheet 1 mm thick on a hot press kept at 210°C to prepare at test piece of 40 x 40 1 mm in size. This test piece was placed in a Geer oven kept at 160°C and the time required for 30% of its area to become brittle was measured and taken as the thermal embrittlement induction period to evaluate the thermal and oxidation stability.

Blend :

| | part by weight |
|---|---|
| Unstabilized polypropylene resin | 100 |
| Calcuim stearate | 0.1 |
| Test compound (Examples 1 to 46) | variable |

Also, a test piece prepared in the same manner as above was tested for thermal discoloration in a Geer oven kept at 160°C. The thermal discoloration was evaluated by the color difference, ΔYl, between the test piece above and the antioxidant-free test piece before the thermal ageing. The results are shown in Table 3.

The symbols used in Tables 3 to 5 show the following compounds :

AO-1 : 1,3,5-Tris(2,6-dimethyl-4-tert-butyl-3-hydroxybenzyl) isocyanurate

AO-2 : Pentaerythritol tetrakis[3-(3,5-di-tert-butyl-4-hydroxyphenyl) propionate)

AO-3 : Pentaerythritol tetrakis [3-(5-tert-butyl-4-hydroxy-3-methylphenyl)prioionate)methane

AO-4 : 1,1,3-Tris(5-tert-butyl-4-hydroxy-2-methylphenyl)butane

AO-5 : Dilauryl thiodipropionate

AO-6 : Distearyl thiodipropionate

Table 3

| Example | No. | Phenolic type stabilizer | | Sulphur containing stabilizer | | Thermal embrittlement induction period | ΔYI | | |
|---|---|---|---|---|---|---|---|---|---|
| | | Kind | Part by weight | Kind | Part by weight | (H) | 0 (H) | 48 (H) | 504 (H) |
| Examples of the invention | 1 | I-1 | 0.05 | II-1-1 | 0.2 | 1690 | -1.7 | -15.8 | -7.7 |
| | 2 | " | " | II-1-2 | 0.1 | 1510 | -1.5 | -15.0 | -5.8 |
| | 3 | " | " | " | 0.2 | 1910 | -2.0 | -16.4 | -8.7 |
| | 4 | " | " | " | 0.3 | 2350 | -2.0 | -16.5 | -8.7 |
| | 5 | " | " | II-1-3 | 0.2 | 1730 | -1.9 | -16.1 | -8.1 |
| | 6 | " | " | II-2-1 | " | 1700 | -1.7 | -15.8 | -7.1 |
| | 7 | " | " | II-2-2 | " | 1750 | -1.7 | -15.9 | -7.3 |
| | 8 | " | " | II-2-3 | " | 1810 | -1.8 | -16.0 | -8.1 |
| | 9 | " | " | II-2-4 | 0.1 | 1480 | -1.6 | -15.2 | -5.9 |
| | 10 | " | " | " | 0.2 | 1890 | -1.9 | -16.3 | -8.5 |
| | 11 | " | " | " | 0.3 | 2240 | -2.0 | -16.7 | -8.6 |
| | 12 | " | " | II-2-5 | 0.2 | 1810 | -1.8 | -16.0 | -8.2 |
| | 13 | " | " | II-2-6 | " | 1880 | -1.9 | -16.3 | -8.4 |
| | 14 | I-2 | " | II-1-2 | " | 1890 | -1.9 | -16.0 | -8.4 |
| | 15 | " | " | II-2-4 | " | 1870 | -1.8 | -15.9 | -8.2 |
| | 16 | " | " | II-2-5 | " | 1800 | -1.7 | -15.6 | -8.0 |
| | 17 | I-3 | " | II-1-2 | " | 1780 | -1.7 | -15.6 | -7.9 |
| | 18 | " | " | II-2-4 | " | 1760 | -1.7 | -15.4 | -7.6 |
| | 19 | " | " | II-2-5 | " | 1700 | -1.6 | -15.3 | -7.4 |
| Comparative examples | 20 | I-1 | 0.05 | AO-5 | 0.2 | 480 | -1.3 | -12.6 | - |
| | 21 | " | " | AO-6 | " | 640 | -1.5 | -12.8 | -0.8 |
| | 22 | I-2 | " | AO-5 | " | 480 | -1.3 | -12.5 | - |
| | 23 | " | " | AO-6 | " | 630 | -1.5 | -12.7 | -0.6 |
| | 24 | I-3 | " | AO-5 | " | 470 | -1.2 | -12.5 | - |
| | 25 | " | " | AO-6 | " | 620 | -1.5 | -12.6 | -0.4 |
| | 26 | AO-1 | " | II-1-2 | " | 1200 | 0.5 | -7.5 | 3.7 |
| | 27 | " | " | II-2-4 | " | 1150 | 1.0 | -6.7 | 4.5 |

Table 3 (Cont'd)

| Example | No. | Phenolic type stabilizer | | Sulphur containing stabilizer | | Thermal embrittlement induction period | ΔYI | | |
|---|---|---|---|---|---|---|---|---|---|
| | | Kind | Part by weight | Kind | Part by weight | (H) | 0 (H) | 48 (H) | 504 (H) |
| Comparative examples | 28 | AO-1 | 0.05 | AO-6 | 0.2 | 590 | 0.8 | -5.1 | 12.2 |
| | 29 | AO-2 | " | II-1-2 | " | 400 | -1.0 | -12.9 | - |
| | 30 | " | " | " | 0.3 | 480 | -1.4 | -13.2 | - |
| | 31 | " | " | II-2-2 | 0.2 | 390 | -1.0 | -12.8 | - |
| | 32 | " | " | II-2-4 | " | 440 | -1.2 | -13.1 | - |
| | 33 | " | " | " | 0.3 | 530 | -1.4 | -13.7 | 12.9 |
| | 34 | " | " | II-2-5 | 0.2 | 430 | -1.3 | -13.0 | - |
| | 35 | " | " | AO-5 | " | 450 | -1.3 | -13.2 | - |
| | 36 | " | " | " | 0.3 | 500 | -1.4 | -13.7 | - |
| | 37 | " | " | AO-6 | 0.2 | 750 | -1.3 | -13.8 | 1.5 |
| | 38 | " | " | " | 0.3 | 820 | -1.5 | -14.2 | 1.2 |
| | 39 | AO-3 | " | II-1-2 | 0.2 | 1600 | -1.5 | -14.7 | -1.7 |
| | 40 | " | " | II-2-4 | " | 1580 | -1.5 | -14.5 | -1.5 |
| | 41 | " | " | AO-5 | " | 460 | -1.4 | -14.0 | - |
| | 42 | " | " | AO-6 | " | 620 | -1.4 | -14.1 | 2.1 |
| | 43 | AO-4 | " | II-1-2 | " | 510 | -1.3 | -13.7 | 2.3 |
| | 44 | " | " | II-2-4 | " | 430 | -1.2 | -13.6 | - |
| | 45 | " | " | AO-6 | " | 390 | -1.0 | -13.5 | - |
| | 46 | - | - | - | - | 5 | 0.0 | - | - |

Procedure 2

The test compounds in Table 4 were bead-peptized together with an anionic surface active agent to prepare a suspension, and a prescribed amount, as shown in Table 4, of the suspension was added to a graft ABS latex. The mixture was, as usual, salted out with an aqueous magnesium sulfate solution, filtered, washed with water and dried to obtain an ABS resin powder which is a test sample. The thermal and oxidation stability of the ABS resin powder was evaluated by the methods described below. The results are shown in Table 4.

1. The degree of discoloration of the ABS resin powder after thermal ageing in a 180°C Geer oven was observed.

2. The oxygen absorption induction period (I.P.) in a 170°C oxygen atmosphere was measured using an oxygen absorption induction period measurement apparatus.

3. The ABS resin powder was repeatedly extruded on a small extruder (screw: D=20 mmϕ, L/D=25; strand die: D=3 mmϕ, L/D=10) under the following conditions. The degree of discoloration of the ABS pellet after 4th extrusion was evaluated by the color difference, ΔYI, between said ABS pellet and the antioxidant-free ABS pellet after 1st extrusion.

Extrusion conditions :

Number of revolutions 40 rpm

| Temperature: | $C_1$ | $C_2$ | $C_3$ | D |
|---|---|---|---|---|
| | 220°C | 240°C | 260°C | 280°C |

4. The ABS pellet after 4th extrusion obtained by the method in 3 above was compression-molded under conditions of 180°C × 10 min. to prepare No. 1 test piece specified by JIS K 7111. Thereafter, the Charpy impact test was carried out according to JIS K 7111 using a Charpy impact tester. In Table 4, AO-7 is the compound 2,6-Di-tert-butyl-4-methylphenol.

Table 4

| Test compound \ Example No. | | Examples of the invention 1 | 2 | 3 | 4 | 5 | 6 | Comparative example 5 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|
| Phenolic type stabilizer | I-1 | 0.5 | 0.5 | 0.5 | 0.5 | 0.5 | 0.5 | 0.5 | | | | | | | | | | | | No addition |
| | AO-2 | | | | | | | | 0.5 | 0.5 | 0.5 | 0.5 | 0.5 | 0.5 | 0.5 | | | | | |
| | AO-7 | | | | | | | | | | | | | | | 0.5 | 0.5 | 0.5 | 0.5 | |
| Sulfur-containing stabilizer | II-1-2 | 0.5 | 1.0 | | | | | | 0.5 | 1.0 | | | | | | 0.5 | | | | |
| | II-2-4 | | | 0.5 | 1.0 | | | | | | 0.5 | | | | | | 0.5 | | | |
| | II-2-5 | | | | | 0.5 | 1.0 | | | | | 0.5 | 1.0 | | | | | 0.5 | | |
| | AO-5 | | | | | | | 0.5 | | | | | | 0.5 | 1.0 | | | | 0.5 | |
| Degree of discoloration | After 30 min | Pale yellow | do | do | do | do | do | Yellowish brown | do | do | do | do | do | do | do | Deep brown | do | do | do | do |
| | After 60 min | Yellowish brown | do | do | do | do | do | Brown | do | do | do | do | do | do | do | Blackish brown | do | do | do | do |
| I.P. (min) | | 215 | 275 | 210 | 265 | 215 | 270 | 145 | 145 | 155 | 145 | 145 | 155 | 145 | 155 | 150 | 150 | 150 | 140 | 10 |
| ΔYI | | 10.8 | 10.2 | 10.9 | 10.5 | 10.8 | 10.4 | 14.1 | 14.5 | 14.7 | 14.3 | 14.5 | 14.8 | 14.6 | 14.9 | 14.5 | 14.6 | 14.8 | 15.0 | 15.9 |
| Value of Charpy impact test (Kgf.cm/cm) | | 21.4 | 21.9 | 20.6 | 21.2 | 20.9 | 21.4 | 11.8 | 11.7 | 12.9 | 11.6 | 11.6 | 13.0 | 11.4 | 13.5 | 12.4 | 12.5 | 12.4 | 11.7 | 7.2 |

Note: The amount added is the weight of the test compound per 100 parts by weight of the solid matter of the resin

Procedure 3

To a 25% urethane dope (comprising 25 parts of a polyurethane resin, 3.75 parts of dimethylformamide and 71.25 parts of tetrahydrofuran) were added the test compounds shown in Table 5. The amount of compound added, as shown in Table 5, was expressed in parts by weight per 100 parts by weight of the polyurethane resin. The mixture was coated onto polyester film in a thickness of 1.2 mm and dried for 1 hour in a dryer kept at 45°C. The sheet thus obtained was punched into No. 3 dumb-bell test pieces. The test pieces were exposed to light for 60 hours and 120 hours in a fade-O-meter (light source, ultraviolet carbon arc; temperature of black panel, 63±3°C), and the percent retention of break strength was obtained by the tensile test (tensile rate, 200 mm/min; measurement tmperature, 25°C). The results are shown in Table 5.

Table 5

| Test compound | | Examples of the invention | | | | | | Comparative examples | | | |
|---|---|---|---|---|---|---|---|---|---|---|---|
| | | 1 | 2 | 3 | 4 | 5 | 6 | 7 | 8 | 9 | 10 |
| Phenolic type stabilizer | I-1 | 0.5 | 0.5 | 0.5 | 0.5 | 0.5 | 0.5 | 0.5 | | | |
| | AO-1 | | | | | | | | 0.5 | 0.5 | 0.5 |
| | AO-2 | | | | | | | | | | |
| Sulfur-containing stabilizer | II-1-2 | 0.5 | 1.0 | | | | | | 0.5 | | |
| | II-2-4 | | | 0.5 | 1.0 | | | | | 0.5 | |
| | II-2-5 | | | | | 0.5 | 1.0 | | | | 0.5 |
| | AO-5 | | | | | | | 0.5 | | | |
| Percent retention of break strength (%) | 60 hr | 58 | 63 | 56 | 59 | 57 | 61 | 39 | 35 | 35 | 35 |
| | 120 hr | 41 | 45 | 38 | 42 | 40 | 44 | 24 | 20 | 19 | 20 |

Table 5 (Cont'd)

| Test compound | | Comparative examples | | | | | | | |
|---|---|---|---|---|---|---|---|---|---|
| | | 11 | 12 | 13 | 14 | 15 | 16 | 17 | 18 |
| Phenolic type stabilizer | I-1 | | | | | | | | No addition |
| | AO-1 | 0.5 | | | | | | | |
| | AO-2 | | 0.5 | 0.5 | 0.5 | 0.5 | 0.5 | 0.5 | |
| Sulfur-containing stabilizer | II-1-2 | | 0.5 | 1.0 | | | | | |
| | II-2-4 | | | | 0.5 | | | | |
| | II-2-5 | | | | | 0.5 | 1.0 | | |
| | AO-5 | 0.5 | | | | | | 0.5 | |
| Percent retention of break strength (%) | 60 hr | 35 | 36 | 37 | 36 | 36 | 37 | 36 | 30 |
| | 120 hr | 20 | 21 | 21 | 20 | 21 | 22 | 20 | 16 |

0153867

CLAIMS:

(1) A stabilizer for synthetic resins containing as an effective component a mixture comprising at least one phenolic type compound selected from those of formula (I),

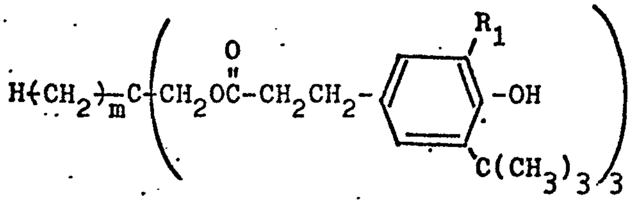 (I)

wherein m is an integer of 0 to 6 and $R_1$ represents a $C_1$-$C_3$ alkyl group, and at least one sulfur-containing compound (II) selected from those of formula (II-1),

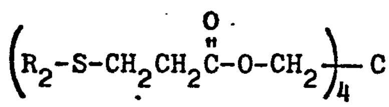 (II-1)

wherein $R_2$ represents a $C_4$-$C_{20}$ alkyl group, and those of formula (II-2),

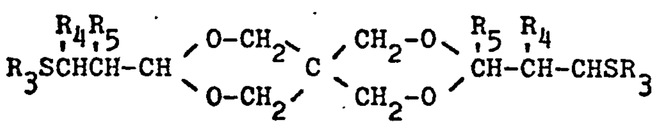 (II-2)

wherein $R_3$ represents a $C_3$-$C_{18}$ alkyl group, and $R_4$ and $R_5$ are selected independently from a hydrogen atom and $C_1$-$C_6$ alkyl groups.

2. A stabilizer according to claim 1, wherein the weight ratio of phenolic type compound(s) (I) to sulfur-containing type compound(s) (II) is 1 to 0.5-15, preferably 1 to 1-10, most preferably 1 to 2-6,

3. A stabilizer according to claim 1 or 2 containing the phenolic type compound (I) trimethylolpropane tris(3-(3-tert-butyl-4-hydroxy-5-methylphenyl)propionate).

4. A stabilizer according to any preceding claim containing the phenolic type compound (I) trimethylolethane tris(3-(3-tert-butyl-4-hydroxy -5-methylphenyl)propionate).

5. A stabilizer according to any preceding claim containing the phenolic type compound (I) trimethylolpropane tris(3-(3-tert-butyl-4-hydroxy -5-isopropylphenyl)propionate).

6. A stabilizer according to any preceding claim containing the sulfur-containing compound (II-1) tetrakis(3-dodecylthiopropionyloxymethyl) methane.

7. A stabilizer according to any preceding claim containing the sulfur-containing compound (II-2) 3,9-bis(2-dodecylthioethyl)-2,4,8,10-tetraoxaspiro(5.5)undecane.

8. A synthetic resin, e.g. a polyolefin and preferably polypropylene, incorporating a stabilizer according to any preceding claim.

9. A resin according to claim 8 containing from 0.01 to 5, preferably 0.05 to 1, parts by weight of the stabilizer per 100 parts by weight of resin.